# EUROPEAN PATENT SPECIFICATION

(11) **EP 2 275 294 B1**
(45) Date of publication and mention of the grant of the patent: **27.03.2013**
(21) Application number: 10007170.3
(22) Date of filing: 12.07.2010
(51) Int. Cl.: B60H 1/32

(54) **Drain pan**
Ablaufwanne
Bac de récupération

(30) Priority: 14.07.2009 JP 2009165950
(43) Date of publication of application: 19.01.2011
(73) Proprietor: Keihin Corporation, Tokyo (JP)
(72) Inventor: Higa, Naoki, Shioya-gun Tochigi-ken (JP)
(74) Representative: Eisenführ, Speiser & Partner

(56) References cited:
- JP-A- 2003 285 636
- JP-A- 2005 335 508

## Description

### BACKGROUND OF THE INVENTION

### Field of the Invention

The present invention relates to a drain pan.

### Description of the Related Art

In a vehicle air-conditioning apparatus, it is known that a cooling apparatus such as an evaporator produces cold air.

When producing cold air, moisture which is contained in the air condenses, to thereby form so-called water of condensation.

Water of condensation is produced and adheres to the cooling apparatus and thereafter falls to a lower portion of the cooling apparatus.

The vehicle air-conditioning apparatus is provided with a drain pan that is used to receive water of condensation as described above and discharge the water of condensation out of the vehicle air-conditioning apparatus (see, for example, Japanese Unexamined Patent Application, First Publication No. 2004-291701, Japanese Unexamined Patent Application, First Publication No. 8-258556, and Japanese Unexamined Patent Application, First Publication No. 10-109522).

Prior art document JP 2005 335508 A discloses a vehicular air-conditioner according to the preamble of claim 1, wherein a recessed part is formed on a bottom part of a case in which air flow takes place in the air-conditioner. The recessed part includes a discharge port to discharge condensed water in the lowest part of the recessed part. A rib is formed at an entrance part of the air supply passage located on the downstream side of the air flow of the recessed part in the direction across the air flow. The arrangement of the air conditioner includes further ribs in the recessed part.

Furthermore, prior art document JP 2003 285636 A discloses an air conditioner for a vehicle, wherein a drain pan is provided which includes a drain cannel as well as in the lower portion thereof a main rib which on the one hand reinforces the drain pan and on the other hand dams water from both sides.

However in a vehicle air-conditioning apparatus, a drain port provided in a drain pan must be disposed in a central portion of the drain pan because portions of the drain pan which are molded and the like are restricted during manufacturing.

In this case, the water of condensation flows from both sides of the drain port into the drain port disposed in the central portion of the drain pan.

Consequently the shape of the drain port and the connection between the drain port and a canal for drain are designed on the premise that water of condensation will inflow from both sides of the drain port.

More specifically, the shape of the drain port and the connection between the drain port and the canal for drain are designed for example so that noises are not produced as a result of discharge water.

However since a vehicle runs and stops, the water of condensation may accumulate on one side of the drain pan due to the state of motion of the vehicle.

Thereafter, there is a case in which the water of condensation flows towards the drain port from one side of the drain port.

In this situation, the water of condensation may not flow into the drain port as not dispersed from both sides of the drain port, but rather a large amount of water of condensation may flow at once towards the drain port from one side of the drain port and thereby an noise may result from the discharge water.

The present invention was made with respect to the above-described problems, it is an object to suppress the production of an noise resulting from simultaneous flow of water of condensation towards a drain port from one side of a drain port provided in a central portion in a drain pan disposed in a vehicle air-conditioning apparatus.

### SUMMARY OF THE INVENTION

The present invention employs the followings in order to achieve the above described object.

That is, a drain pan according to the present invention is disposed below a cooling unit that cools air, receives water of condensation that falls from the cooling unit, and guides the water of condensation into an outer portion of the vehicle air-conditioning apparatus. The drain pan includes a water receiving region and receives the water of condensation, a drain port disposed at a bottom-center portion of the water receiving region, and a rib disposed upright on the bottom portion on a dividing line that passes through the drain port and divides the water receiving region. The rib is inclined with respect to the direction of flow of the water of condensation.

The rib may be disposed at least downstream side of the drain port with respect to airflow direction.

The drain pan may include a canal for drain that is connected to incline with respect to the drain port and is provided with an inner wall face, and the rib is disposed to be relatively removed from the region in which the inner wall face is connected at an acute angle with respect to the bottom portion, and to be relatively close to the region in which the inner wall face is connected at an obtuse angle with respect to the bottom portion.

According to the present invention, the rib is provided in an upright direction on the bottom portion on a dividing line that passes through the drain port, divides the water receiving region, and suppresses water of condensation from flowing from a first region in which the water of condensation initially drops into a second region different from the first area.

In other words, according to the present invention, the water of condensation can be prevented from accumulating in a region on one side of the water receiving region.

As a result, the water of condensation can be prevented from flowing simultaneously toward the drain port from one side of the drain port.

Thus according to the present invention, the production of an noise resulting from water of condensation flowing simultaneously towards the drain port from one side of the drain port that is provided in a central portion can be prevented.

### BRIEF DESCRIPTION OF THE DRAWINGS

FIG. 1 is a longitudinal cross-sectional view of a vehicle air-conditioning apparatus provided with a drain pan according to an embodiment of the present invention.
FIG. 2 is a horizontal cross-sectional view of the vehicle air-conditioning apparatus provided with a drain pan according to the embodiment of the present invention.
FIG. 3 is a perspective view of the drain pan according to the embodiment of the present invention.
FIG. 4 is a schematic plan view of the drain pan according to the embodiment of the present invention.
FIG 5 is a schematic plan view of a drain pan according to an explanatory example.

### DETAILED DESCRIPTION OF THE PREFERRED EMBODIMENTS

An embodiment of the present invention as well as an explanatory example will now be described with reference to the drawings.

In the figures, the scale of various members has been suitably varied to a size that enables recognition of the various members.

### Embodiment

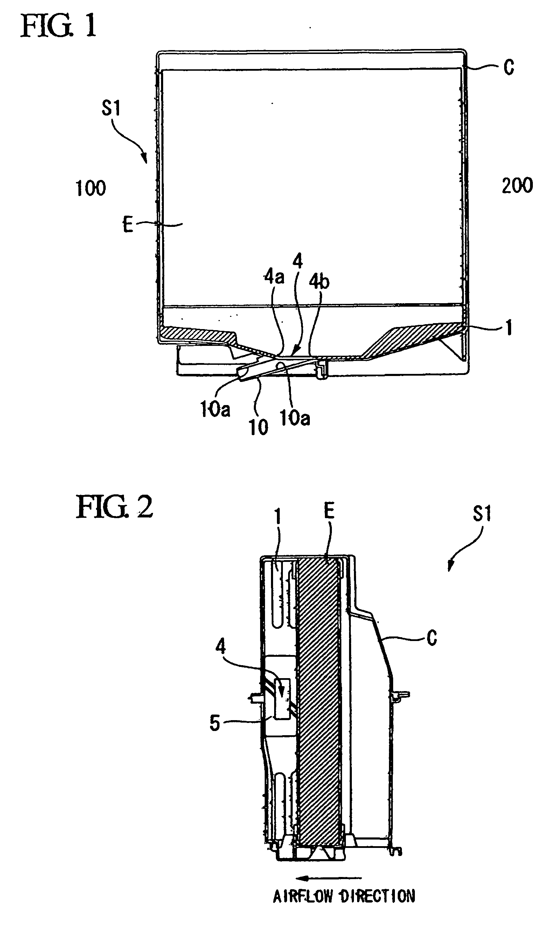

FIG. 1 is a longitudinal sectional view including a drain pan 1 for a vehicle air-conditioning apparatus S1 (HVAC: heating ventilating air conditioning) provided with a drain pan 1 according to the present embodiment. In FIG. 1, reference numeral 100 indicates a region on the passenger seat side and reference numeral 200 indicates a region on the driver seat side. The region indicates by reference 100 may be the driver seat side and the region indicates by reference 200 may be the passenger seat side. FIG. 2 is a horizontal cross-sectional view of the vehicle air-conditioning apparatus S1 and extracts only the region containing the drain pan 1.

The vehicle air-conditioning apparatus S1 is an apparatus supplying conditioned air into the vehicle. As shown in FIGS. 1 and 2, the vehicle air-conditioning apparatus S1 is provided with a case C, an evaporator E, and the drain pan 1. The case C, forms the outer shape of the vehicle air-conditioning apparatus S1 and houses the passage for air into an inner portion, the evaporator E (cooling apparatus) and the like. The evaporator E cools air and is disposed to be exposed in the air flowing in the airflow direction as shown in FIG. 2. In the present embodiment, the airflow direction shown in FIG. 2 substantially corresponds with the direction from the rear to the front of the vehicle. The case C and the evaporator E have the same structure as a known vehicle air-conditioning apparatus and therefore description thereof will be omitted.

The vehicle air-conditioning apparatus S1 according to the present embodiment, in the same manner as a conventional vehicle air-conditioning apparatus, is provided with a heater core for heating air, an outlet for discharging conditioned air, a damper for opening and closing the outlet, an air mix damper for regulating temperature of the conditioned air, and the like. These constitutive members have a known configuration and therefore description thereof will be omitted.

The drain pan 1 according to the present embodiment, as shown in FIGS. 1 and 2, is disposed below the evaporator E and receives water of condensation falling from the evaporator E, and thereafter guides the water of condensation to an outer portion of the vehicle air-conditioning apparatus S1. The drain pan 1 is configured, for example, using expanded rubber or the like to absorb vibrations. The drain pan 1 is disposed between the case C and the evaporator E and is configured to function as an insulator.

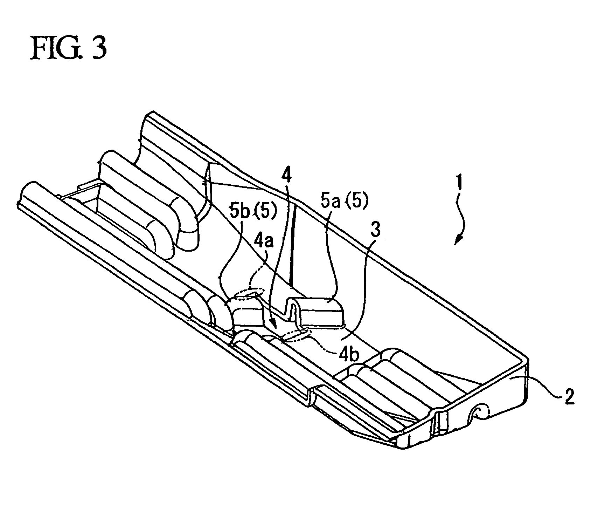

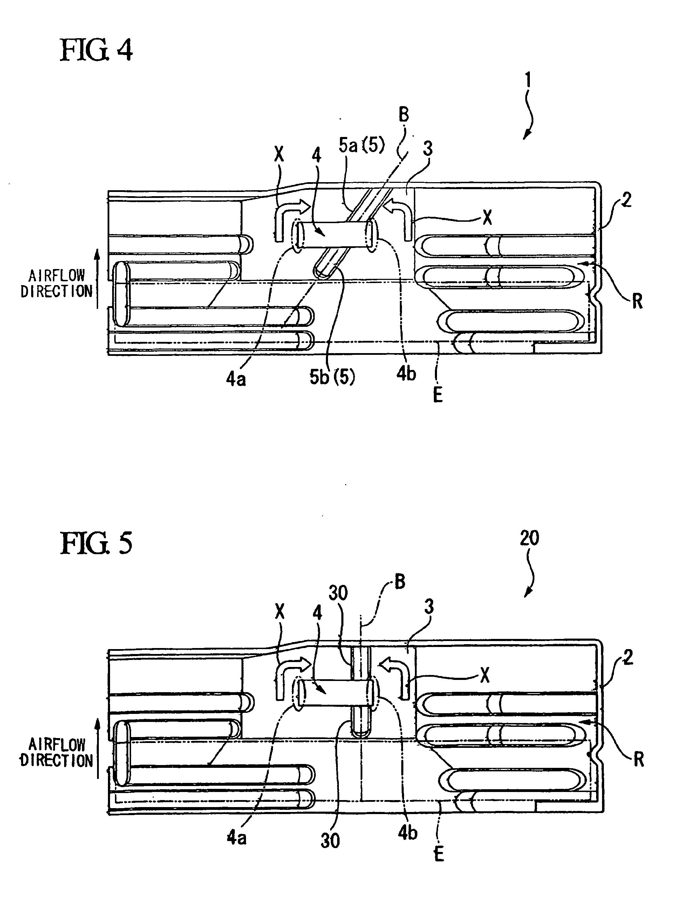

FIG. 3 is a perspective view of a drain pan 1 according to the present embodiment. FIG. 4 is a schematic plan view of a drain pan 1 according to the first embodiment of the present invention. As shown in the figures, the drain pan 1 according to the present embodiment is provided with a side wall 2, a bottom portion 3, a drain port 4, and a rib 5.

The side wall 2 is a wall portion formed to encircle a water receiving region R. In other words, the region encircled by the side wall 2 in the drain pan 1 according to the present embodiment is the water receiving region R. This water receiving region R receives drops of water from the evaporator E.

The bottom portion 3 is disposed in a central portion of the water receiving region R and is formed at the lowest point in the water receiving region R. Furthermore the bottom portion 3 is the region to which water of condensation received in the water receiving region R is accumulated.

The drain port 4 discharges water of condensation accumulating in the bottom portion 3 to an outer portion of the vehicle air-conditioning apparatus S1. The drain port 4 is disposed at a central portion of the bottom portion 3(bottom-center portion), and as a result, is disposed in a central portion of the water receiving region R. The central portion as used in the present embodiment (the present invention) means a region indicating not only the center of the region but excluding the end portions of the region. In the drain pan 1 according to the present embodiment, the drain port 4 as shown in FIG. 4 is configured in an elongated rectangular shape in a direction orthogonal to the airflow direction.

As shown in FIG. 1, the canal for drain 10 inclines from below and is connected with the drain port 4. More specifically, the canal for drain 10 extends towards the drain port 4 from the passenger seat side and is connected with the drain port 4. An inner wall face 10a of the canal for drain 10 is connected at an acute angle to the bottom portion 3 at an end portion 4a disposed on the passenger seat side of the drain port 4. The inner wall face 10a of the canal for drain 10 is connected at an obtuse angle to the bottom portion 3 at an end portion 4b disposed on the driver seat side of the drain port 4.

The rib 5 is disposed upright on the bottom portion 3 on the dividing line B that passes through the drain port 4 and divides the water receiving portion R. The dividing line B may be virtually provided. If the conditions in which the dividing line B passes through the drain port 4 are satisfied, the dividing line B can be optionally defined. It is not necessary for the dividing line B to be linear.

The rib 5 is composed of a downstream rib 5a provided on a downstream side of the drain port 4 and an upstream rib 5b provided on an upstream side of the drain port 4. The rib 5a and the rib 5b are provided with reference to the airflow direction. The rib 5a and the rib 5b as shown in FIG. 4 are provided to incline with reference to the direction of flow of the water of condensation X.

As shown in FIG. 4, the rib 5 is provided near to the end portion 4b of the drain port 4 at which the inner wall face 10a of the canal for drain 10 is connected at an obtuse angle to the bottom portion 3.

In other words, the drain pan 1 according to the present embodiment configures the rib 5 to be relatively distant from the end portion 4a of the drain port 4 that is the region in which the inner wall portion 10a of the canal for drain 10 is connected at an acute angle to the bottom portion 3, and to be relatively close to the end portion 4b of the drain port 4 that is the region in which the inner wall portion 10 of the canal for drain 10 is connected at an obtuse angle to the bottom portion 3.

When the vehicle air-conditioning apparatus S1 is operated, the supplied air is cooled by the evaporator E. As a result, water of condensation becomes adhered to the evaporator E, and thereafter the water of condensation falls from the evaporator E. The falling water of condensation is received into the water receiving region R in the drain pan 1 according to the present embodiment, accumulates in the bottom portion 3, and then the water of condensation is discharged to an outer portion of the vehicle air-conditioning apparatus S1 through the drain port 4.

In the drain pan 1 according to the present embodiment, since the rib 5 passes through the drain port 4 and is disposed upright on the dividing line B that divides the water receiving region R, the water receiving region R is divided into a passenger seat side and a driver seat side. As a result, the rib 5 dams water of condensation X and therefore prevents the water of condensation X that has fallen onto the passenger seat side of the water receiving region R from flowing toward the driver seat side. Furthermore water of condensation X falling into the driver seat side of the water receiving region R is prevented from flowing toward the passenger seat side.

In this manner, according to the drain pan 1 of the present embodiment, water of condensation X can be prevented from accumulating on one side of the water receiving region R. Thus as a result, the water of condensation X can be prevented from flowing simultaneously from one side of the drain port 4 toward the drain port 4. Thus according to the drain pan 1 of the present embodiment, it is possible to prevent the production of an noise as a result of water of condensation X flowing simultaneously from one side of the drain port 4 disposed in a central portion toward the drain port 4.

According to the drain pan 1 of the present embodiment, the rib 5 (downstream rib 5a) is provided downstream side of the drain port 4 in the airflow direction.

The water of condensation X falling from the evaporator E tends to accumulate on a downstream side of the drain port 4 as a result of flowing in the flow of air passing through the evaporator E.

As a result, since the rib 5 is provided downstream of the drain port 4 in the drain pan 1 according to the present embodiment, the water of condensation X can be effectively dammed.

Furthermore in a drain pan 1 according to the present embodiment, the rib 5 is provided to incline with respect to the direction of flow of the water of condensation X. As a result, the water of condensation X that has been dammed by the rib 5 can be guided smoothly into the drain port 4.

In a drain pan 1 according to the present embodiment, the canal for drain 10 inclines and is connected to the drain port 4. According to this configuration, a film of the water of condensation X that has flowed toward the drain port 4 from the end portion 4a of the drain port 4 which is the region in which the inner wall face 10 of the canal for drain 10 is connected at an acute angle to the bottom portion 3 may be formed in the canal for drain 10. This type of water film is severed by the differential pressure in the canal for drain 10 and may cause an noise.

However in a drain pan 1 according to the present embodiment, the rib 5 is disposed to be relatively removed from the end portion 4a of the drain port 4 which is region in which the inner wall face 10a of the canal for drain 10 is connected at an acute angle with respect to the bottom portion 3, and to be relatively close to the end portion 4b of the drain port 4 which is the region in which the inner wall face 10a of the canal for drain 10 is connected at an obtuse angle with respect to the bottom portion 3. As a result, the water of condensation X that is dammed by the rib 5 tends to be guided by the rib 5 and flow towards the end portion 4b. As a result, the production of a water film in the canal for drain 10 can be suppressed and it is possible to further suppress the production of an noise.

### Explanatory Example

Next an explanatory example in conjunction with the present invention will be described.

In the description of the example which is not covered by the claims, those elements which are the same as the elements in the embodiment are denoted by the same reference numerals and description will not be repeated for the sake of simplicity.

FIG. 5 is a schematic plan view of a drain pan 20 according to the example. As shown in the figure, the drain pan 20 disposes a dividing line B along the airflow direction and a rib 30 is provided orthogonal to the direction of flow of the water of condensation X.

The rib 30 in a drain pan 20 according to the example having the above configuration also dams the water of condensation X in the same manner as the drain pan 1 according to the embodiment. In this manner, the water of condensation X that has fallen onto the passenger seat side of the water receiving region R is prevented from flowing toward the driver seat side. Furthermore the water of condensation X that has fallen onto the driver seat side of the water receiving region R is prevented from flowing toward the passenger seat side. As a result, the drain pan 20 according to the example, in a similar manner to the drain pan 1 according to the embodiment, enables prevention of the production of an noise resulting from the simultaneous flow of water of condensation X toward the drain port 4 from one side of the drain port 4 disposed in a central portion.

For example, in the above explanatory example, a configuration was described in which the drain pan 1 functioned as an insulator.

The drain pan according to the example may be realized by molding the lower portion of the case C.

In the above example, a configuration was described in which the rib 5, 30 provided downstream of the drain port 4 in the airflow direction is separate from the rib 5, 30 provided upstream of the drain port 4. However the present invention as well as the example are not limited in this regard and a configuration may be adopted in which the rib 5, 30 provided downstream of the drain port 4 in the airflow direction and the rib 5, 30 provided upstream of the drain port 4 are connected on the drain port 4.

While the preferred embodiment of the invention as well as the explanatory example have been described and illustrated above, it should be understood that these are exemplary and are not to be considered as limiting. Regarding the invention, additions, omissions, substitutions, and other modifications can be made without departing from the scope of the present invention. Accordingly, the invention is not to be considered as being limited by the foregoing description, and is only limited by the scope of the appended claims.

## Claims

1. A vehicle air-conditioning apparatus comprising a cooling unit which cools air, and
a drain pan which is disposed below the cooling unit, receives condensation water that falls from the cooling unit, and guides the condensation water into an outer portion, wherein
the drain pan includes:
a water receiving region (R) receiving the condensation water (X);
a drain port (4) disposed at a bottom-center portion of the water receiving region (R); and
a rib (5) disposed upright in the bottom portion (3) on a dividing line (B) that passes though the drain port (4) and divides the water receiving region (R) **characterized in that** the rib (5) is inclined with respect to a direction of flow of the condensation water (X).

2. The vehicle air-conditioning apparatus according to claim 1, further comprising:
a canal for drain (10) connected to incline with respect to the drain port (4), and having an inner wall face, wherein the rib (5) is disposed to be relatively removed from the region in which the inner wall face is connected at an acute angle with respect to the bottom portion (3), and to be relatively close to the region in which the inner wall face is connected at an obtuse angle with respect to the bottom portion (3), a downstream rib (5a) provided on a downstream side of the drain pan (1) is provided nearer the end portion (4b) of the drain port (4) at which the inner wall face (10a) of the canal for drain (10) is connected at an obtuse angle to the bottom portion (3) than the end portion (4a) of the drain port (4) at which the inner wall face (10a) of the canal for drain (10) is connected at an acute angle to the bottom portion (3).

## Patentansprüche

1. Fahrzeug-Klimaanlage, die eine Kühleinheit umfasst, die Luft kühlt, sowie eine Ablaufwanne, die unterhalb der Kühleinheit angeordnet ist, das von der Kühleinheit herabfallende Kondenswasser aufnimmt und das Kondenswasser zu einem Außenabschnitt leitet, wobei die Ablaufwanne enthält:
einen Wasseraufnahmebereich (R), der das Kondenswasser (X) aufnimmt;
eine Ablauföffnung (4), die an einem unteren zentralen Abschnitt des Wasseraufnahmebereichs (R) angeordnet ist; und
eine Rippe (5), die aufrecht im Bodenabschnitt (3) auf einer Teilungslinie (B), die durch die Ablauföffnung (4) verläuft und den Wasseraufnahmebereich (R) teilt, angeordnet ist,
**dadurch gekennzeichnet, dass**
die Rippe (5) bezüglich einer Fließrichtung des Kondenswassers (X) geneigt ist.

2. Fahrzeug-Klimaanlage nach Anspruch 1, ferner enthaltend:
einen Kanal für den Ablauf (10), der so verbunden ist, dass er bezüglich der Ablauföffnung (4) geneigt ist, und der eine Innenwandfläche aufweist, wobei die Rippe (5) so angeordnet ist, dass sie von dem Bereich, in dem die Innenwandfläche in einem spitzen Winkel bezüglich des Bodenabschnitts (3) verbunden ist, relativ entfernt ist und zu dem Bereich, in dem die Innenwandfläche in einem stumpfen Winkel bezüglich des Bodenabschnitts (3) verbunden ist, relativ nah ist, wobei eine stromabwärts gelagerte Rippe (5a), die an einer stromabwärts gelagerten Seite der Ablaufwanne (1) vorgesehen ist, näher zu dem Endabschnitt (4b) der Ablauföffnung (4), an dem die Innenwandfläche (10a) des Kanals für den Ablauf (10) in einem stumpfen Winkel mit dem Bodenabschnitt (3) verbunden ist, vorgesehen ist als an dem Endabschnitt (4a) der Ablauföffnung (4), an dem die Innenwandfläche (10a) des Kanals für den Ablauf (10) in einem spitzen Winkel mit dem Bodenabschnitt (3) verbunden ist.

## Revendications

1. Dispositif de conditionnement d'air d'un véhicule comprenant un groupe de refroidissement qui refroidit de l'air et un bac de vidange, qui est disposé en dessous du groupe de refroidissement, qui reçoit de l'eau de condensation qui tombe du groupe de refroidissement et qui guide l'eau de condensation dans une partie extérieure, dans lequel Le bac de vidange comprend :
une région (R) de réception d'eau recevant l'eau (X) de condensation ;
un orifice (4) de vidange disposé dans la partie centrale de fond de la région (R) de réception d'eau ; et
une nervure (5) montant dans la partie (3) de fond sur une ligne (B) de subdivision qui passe par l'orifice (4) de vidange et qui subdivise la région (R) de réception d'eau,
**caractérisé en ce que** la nervure (5) est inclinée par rapport à une direction d'écoulement de l'eau (X) de condensation.

2. Dispositif de conditionnement d'air d'un véhicule suivant la revendication 1, comprenant en outré :
un canal pour une vidange (10) relié de manière à être incliné par rapport à l'orifice (4) de vidange et ayant une face de paroi intérieure, la nervure (5) étant disposée de manière à être éloignée relativement de la région dans laquelle la face de la paroi intérieure est reliée suivant un angle aigu par rapport à la partie (3) de fond et de manière à être relativement proche de la région dans laquelle la face de paroi intérieure est reliée suivant un angle obtus par rapport à la partie (3) de fond, une nervure (5a) en aval prévue d'un côté en aval du bac (1) de vidange étant prévue plus près de la partie (4b) d'extrémité de l'orifice (4) de vidange où la face (10a) de la paroi intérieure du canal pour une vidange (10) est reliée suivant un angle obtus à la partie (3) de fond que la partie (4) à l'extrémité de l'orifice (4) de vidange où la face (10a) de la paroi intérieure du canal pour une vidange (10) est reliée suivant un angle aigu à la partie de fond.
